# FASCICULE DE BREVET EUROPEEN

(11) **EP 1 806 048 B1**
(45) Date de publication et mention de la délivrance du brevet: **13.08.2008**
(21) Numéro de dépôt: 06301284.3
(22) Date de dépôt: 21.12.2006
(51) Int. Cl.: A01F 29/00

(54) **Machine agricole pour la distribution de produits d'alimentation du betail equipee d'une structure de convoyage de fond**
Landwirtschaftliche Maschine zur Verteilung von Viehfutter mit Bodenfördervorrichtung
Agricultural machine for the distribution of livestok feeding products comprising a bottom conveying structure

(30) Priorité: 22.12.2005 FR 0513181
(43) Date de publication de la demande: 11.07.2007
(73) Titulaire: Lucas G, 85130 La Verrie (FR)
(72) Inventeur: LUCAS, Gérard, 85130, LA VERRIE (FR)
(74) Mandataire: Michelet, Alain

(56) Documents cités:
- DE-A1- 2 810 676
- FR-A- 2 567 715
- US-A- 4 545 716

## Description

La présente invention concerne le domaine général du machinisme agricole. Elle concerne plus particulièrement une machine qui permet d'assurer la distribution de produits, équipée d'une structure de convoyage de fond. Cette machine permet en particulier la distribution de produits pour l'alimentation du bétail, genre fourrage, et/ou d'autres produits du genre déchets ou amendements par exemple.

Ce type de machine comprend principalement une cuve dans laquelle sont positionnés les produits à distribuer (en vrac ou conformés en balles), qui est équipée, à l'avant ou à l'arrière, d'une structure de démêlage et/ou de distribution, par exemple du genre ventilateur associé à un rotor de démêlage et de déchiquetage. Le fond de cette cuve est muni d'une structure de convoyage, du genre tapis à barreaux par exemple, qui est agencée pour faire avancer le produit depuis une ouverture arrière de chargement équipée éventuellement d'une porte, jusqu'à la structure avant de démêlage et de distribution.

La plupart des machines actuelles obligent l'opérateur à rester concentré et vigilant tout au long de la distribution des produits. En effet, en fonction de la nature et de la présentation des produits à distribuer, des phénomènes de bourrage peuvent survenir au niveau de la structure de démêlage et/ou de distribution. Ces difficultés apparaissent en particulier en cas d'accumulation excessive de produits contre la structure précitée, sous l'action des moyens de convoyage.
C'est ce qui peut arriver notamment lorsque plusieurs balles de fourrage sont chargées sur une même structure de convoyage, constituée d'un convoyeur unique motorisé ; dans ce cas, les balles sont poussées ensemble vers la structure de distribution, ce qui empêche le traitement efficace de la balle attaquée par ladite structure de distribution.

Pour pallier à ce problème, le document DE-A-28 10 676 propose d'équiper ce genre de machine avec une structure de convoyage constituée de deux convoyeurs motorisés juxtaposés, l'un avant situé du côté des moyens de démêlage et de distribution, l'autre arrière situé du côté de l'ouverture de chargement ; ces deux convoyeurs sont formés chacun d'un tambour avant et d'un tambour arrière autour desquels s'enroule un organe transporteur sans fin.
Chaque convoyeur est piloté à une vitesse de cheminement adaptée, ce qui autorise un chargement maximal et le réglage optimal de l'alimentation de la structure de démêlage/distribution. Par exemple, dans un premier temps, seul le convoyeur avant est mis en fonctionnement pour la distribution des produits qu'il porte ; ensuite, le convoyeur arrière est piloté pour transférer sa propre charge jusqu'au convoyeur avant, lequel assure le transport de cette charge jusqu'à la structure de démêlage et de déchiquetage.

Mais la mise en oeuvre d'un tel système multi-convoyeurs entraîne certains inconvénients, en particulier sur le plan de la maintenance.

En effet, de manière habituelle, les organes transporteurs sans fin des convoyeurs sont sujets à des pertes de tension, à cause notamment de leur usure et de la présence de jeux au niveau des roulements des tambours associés. Par conséquent, il est nécessaire de réaliser régulièrement des opérations de remise en tension de ces organes transporteur.
Or, dans le cas des structures de convoyage comportant plusieurs convoyeurs motorisés, l'opérateur doit ajuster précisément la position des différents tambours amont ; il doit en plus veiller à conserver une distance minimale entre les convoyeurs juxtaposés, notamment pour limiter les possibilités de passage des produits. Pour ces raisons, les opérations correspondantes de remise en tension sont relativement complexes et fastidieuses.

Pour remédier à cette difficulté, la demanderesse a développé un perfectionnement aux machines agricoles du type de celle décrite dans le document DE-28 10 676 précité, permettant un réglage simultané de la tension des organes transporteurs sans fin des convoyeurs, simplifiant ainsi sensiblement les opérations de maintenance correspondantes.
Ainsi, dans la structure de convoyage de la machine agricole selon l'invention, comprenant au moins deux convoyeurs juxtaposés, le tambour avant du convoyeur avant est fixe, et le tambour arrière du convoyeur avant, ainsi que tous les tambours du ou des convoyeurs arrière, sont montés flottants longitudinalement, lesdits tambours en regard des convoyeurs juxtaposés étant solidaires l'un de l'autre par l'intermédiaire de structures latérales de liaison, et des moyens tendeurs étant prévus au niveau du tambour arrière du convoyeur arrière pour assurer le réglage simultané de la tension des organes transporteurs sans fin des convoyeurs.

Selon une caractéristique supplémentaire, les moyens tendeurs sont de type vis/écrou disposés à chaque extrémité du tambour arrière du convoyeur arrière.

Selon une autre particularité, les tambours avant et arrière de chaque convoyeur sont solidarisés entre eux par l'intermédiaire de structures télescopiques du type fourreau/coulisse, reliant les extrémités en regard desdits tambours.

Encore selon une autre caractéristique, la machine comporte un coin de remplissage aménagé entre les convoyeurs juxtaposés, solidaire des structures latérales de liaison, lesquels coin de remplissage et structures latérales de liaison constituent ensemble une structure coulissante sur le fond de la cuve.

Encore pour diminuer ou supprimer l'espace horizontal libre entre les convoyeurs, le tambour arrière du convoyeur avant est situé à un niveau inférieur par rapport à celui du tambour avant du convoyeur situé juste derrière, et les deux convoyeurs sont partiellement superposés au niveau de leur jonction.

D'autre part, pour créer un décompactage des produits positionnés sur la structure de convoyage, ou pour permettre aux produits conformés en balles de tourner sur elles-mêmes devant la structure de démêlage, sans être gênée(s) par celle(s) stockée(s) en amont, la machine comporte des moyens pour permettre à l'organe transporteur sans fin du convoyeur avant d'avancer plus vite que l'organe transporteur sans fin du ou des convoyeurs arrière.

Selon une forme de réalisation particulière, l'un des tambours de chaque convoyeur est équipé d'une motorisation hydraulique, et les motorisations correspondantes sont montées en série, le circuit étant équipé de moyens en forme d'organes de distribution permettant le découplage de la motorisation du ou des convoyeurs arrière.
Dans ce cas, pour permettre au convoyeur avant d'avoir une vitesse d'avancement supérieure à celle du ou des convoyeurs arrière, la motorisation dudit ou desdits convoyeurs arrière peut être équipée d'un variateur permettant de moduler le différentiel de vitesse recherché. Selon une variante de réalisation (avec ou sans variateur) la motorisation du ou des convoyeurs arrière peut être prévue de cylindrée supérieure à celle du convoyeur avant.

Selon encore une autre caractéristique, la distance entre le front d'attaque de la structure de démêlage/distribution et l'extrémité arrière du convoyeur avant est au maximum de 1,80 mètre. Etant donné les hauteurs classiques de chargement (de l'ordre de 1,8 à 2 mètres), cette particularité permet aux produits déposés sur le convoyeur avant (en vrac ou en balles) de tourner sur eux-mêmes sous l'action des organes démêleurs de la structure de démêlage/distribution, assurant ainsi une alimentation régulière, sans bourrages et sans efforts de cette structure de démêlage et de distribution.

Encore selon une autre particularité de l'invention, pour optimiser le transport de la matière sur la structure de convoyage, les organes transporteurs sans fin des convoyeurs avant et arrière sont constitués de traverses parallèles entraînées par des chaînes latérales, lesdites traverses, sur chacun desdits convoyeurs, étant écartées les unes des autres d'une distance comprise entre 0 et 170 mm.

L'invention sera encore illustrée, sans être aucunement limitée, par la description suivante associée aux dessins annexés dans lesquels :
- la figure 1 est une vue générale, en perspective partiellement éclatée, d'une machine distributrice équipée au niveau de son fond d'une structure de convoyage à deux convoyeurs, conforme à l'invention ;
- la figure 2 est une vue schématique de côté illustrant le principe de mise en tension d'une structure à double convoyeurs selon l'invention ;
- la figure 3 est une vue schématique qui illustre le circuit d'alimentation hydraulique des motorisations associées aux deux convoyeurs des figures 1 et 2 ;
- les figures 4 à 7 montrent schématiquement différentes possibilités d'organisation dans l'espace de deux convoyeurs juxtaposés, visant en particulier à limiter les possibilités de passage des produits dans l'espace inter-convoyeurs.

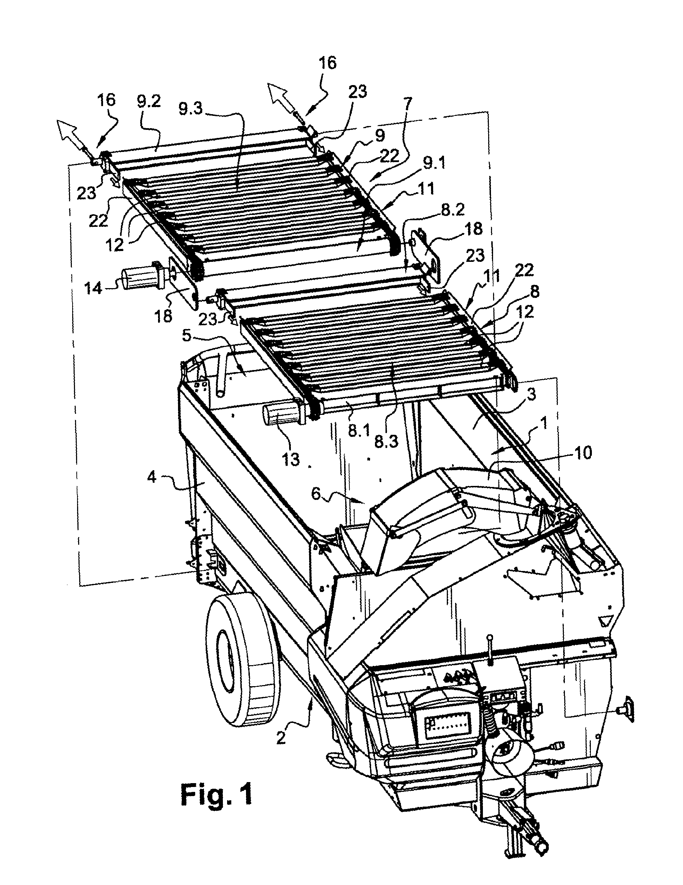

La machine agricole, illustrée sur la figure 1, est une machine apte à recevoir des produits d'alimentation du bétail (par exemple de la paille), soit en vrac, soit conformés en balles ; cette machine est également apte, après leur démêlage, à distribuer ces produits par l'intermédiaire de moyens appropriés.
A cet effet, cette machine comprend une cuve 1 délimitée par un fond 2, par deux parois latérales 3, 4, par une porte de chargement arrière 5 et par une structure avant de démêlage et de distribution 6.
Pour assurer le transport des produits depuis la porte arrière 5 vers la structure de démêlage/distribution 6, le fond 2 de la cuve 1 est équipé d'une structure de convoyage 7, formant un fond mouvant, constitué de deux convoyeurs juxtaposés 8 et 9 (illustrés ici sous forme éclatés, au-dessus de la cuve 1). Le convoyeur 8 situé du côté des moyens de démêlage/distribution 6 est appelé par la suite « convoyeur avant », alors que le convoyeur 9 situé du côté de la porte arrière 5 est appelé « convoyeur arrière ».

Les moyens de démêlage et de distribution 6 sont tout-à-fait classiques ; ils se présentent sous la forme d'un ou de plusieurs rotors horizontaux (non visibles sur la figure 1) équipés de dents de déchiquetage, associé(s) à un système ventilateur (non visible) alimentant une goulotte de distribution 10.

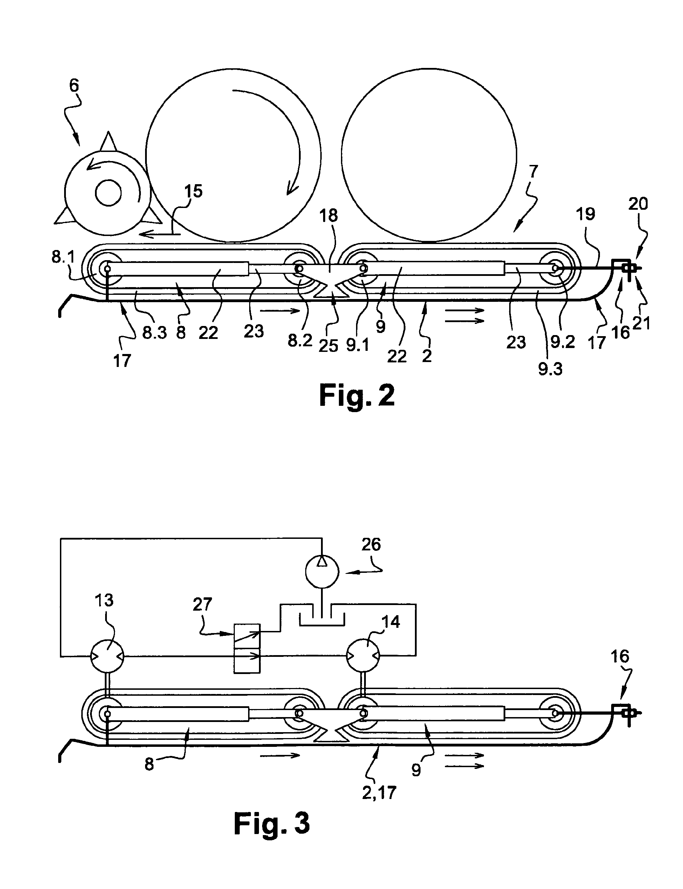

La structure particulière des moyens de convoyage 7 apparaît sur la figure 1, et de manière schématique en vue de côté sur la figure 2.

En l'occurrence, les convoyeurs juxtaposés 8 et 9 sont tous les deux des convoyeurs constitués d'un tambour avant 8.1, 9.1 (du côté des moyens de démêlage/distribution 6) et d'un tambour arrière 8.2, 9.2 (du côté de la porte arrière 5), autour desquels s'enroule un organe transporteur sans fin 8.3, 9.3. Les organes transporteurs 8.3 et 9.3 sont en fait constitués de deux chaînes latérales 11 supportant des barreaux ou traverses parallèles 12 régulièrement espacés.
L'écartement entre deux traverses successives 12 est avantageusement compris entre 0 et 170 mm pour optimiser le déplacement des produits, et en particulier pour assurer un transport le plus continu possible de la matière.

Les tambours avant 8.1 et 9.1 des convoyeurs 8 et 9 sont tous les deux associés à une motorisation hydraulique, respectivement 13 et 14, assurant l'entraînement des organes transporteurs 8.3 et 9.3 dans le sens désiré ; pour l'apport en produits jusqu'aux moyens de démêlage/distribution 6, les brins supérieurs des convoyeurs 8 et 9 sont en particulier pilotés dans le sens de la flèche d'orientation 15 de la figure 2.

Juste sous le brin supérieur des organes transporteurs 8.3 et 9.3 de chaque convoyeur 8, 9, un plateau fixe (non représenté) sert de support aux barreaux transversaux 12.

Conformément à l'invention, ce système à double convoyeurs est structuré pour autoriser la mise ou la remise en tension (ou la détente) des deux organes transporteurs 8.3 et 9.3, ceci simultanément, par l'intermédiaire de moyens de réglage 16 adaptés, situés au niveau de l'extrémité amont du convoyeur arrière 9.

Pour cela :
- le tambour tournant avant 8.1 du convoyeur avant 8 est monté fixe sur le châssis 17 de la machine, par l'intermédiaire de son axe,
- le tambour tournant arrière 8.2 de ce convoyeur avant 8, et les deux tambours tournants 9.1, 9.2 du convoyeur arrière 9, sont montés flottants longitudinalement, par l'intermédiaire de leur axe, c'est-à-dire avec une possibilité de déplacement parallèlement au fond 2 de la cuve 1,
- les tambours arrière 8.2 du convoyeur avant 8 et avant 9.1 du convoyeur arrière 9 sont rigidement reliés entre eux, par l'intermédiaire de platines latérales 18 solidarisant leurs axes, et
- des moyens tendeurs 16 en forme de systèmes vis-écrou sont prévus au niveau du tambour arrière 9.2 du convoyeur arrière 9, pour assurer le réglage du positionnement de l'axe dudit tambour 9.2.

Etant donné le montage flottant des trois tambours amont 8.2, 9.1 et 9.2, on comprend que le réglage du positionnement de l'axe du tambour arrière 9.2 assure, en même temps, le réglage simultané de la tension des organes transporteurs 8.3 et 9.3, ceci de manière simple et rapide.

Comme on peut le voir sur la figure 2, le réglage correspondant est obtenu au moyen d'une vis 19, solidaire de l'axe du tambour 9.2, qui coopère avec un écrou 20 de mise en tension, après passage dans un orifice 21 aménagé dans le châssis 17 de la machine. De préférence, un système de réglage de tension 16 est placé aux deux extrémités du tambour arrière 9.2, pour équilibrer les efforts (tel que cela apparaît sur la figure 1).

Suite à une détente des organes transporteurs sans fin 8.3 et 9.3 des convoyeurs 8 et 9, le rétablissement de la tension est obtenu par une action sur les écrous 20 pour exercer une traction vers l'arrière sur le tambour arrière 9.2 associé. Cette traction provoque une mise en tension de l'organe transporteur arrière 9.3 par un phénomène d'écartement entre les tambours avant 9.1 et arrière 9.2. Dans le même temps, le tambour avant 9.1 du convoyeur arrière 9 assure une traction vers l'arrière sur le tambour arrière 8.2 du convoyeur avant 8 ; le tambour avant 8.1 du convoyeur avant 8 étant fixe, l'organe transporteur sans fin 8.3 est mis en tension par l'écartement des deux tambours 8.1 et 8.2 dudit convoyeur avant 8.

D'autre part, pour optimiser les réglages de tension correspondants, et en particulier pour assurer un déplacement des tambours 8.2, 9.1 et 9.2 parallèlement à eux-mêmes, les tambours avant et arrière de chaque convoyeur 8 et 9 sont solidarisés entre eux par l'intermédiaire de structures télescopiques latérales du type fourreau 22/coulisse 23. En l'occurrence, deux fourreaux latéraux 22 sont solidaires des extrémités de l'axe des tambours avant 8.1 et 9.1, et coopèrent avec des coulisses d'extension 23 solidaires des extrémités de l'axe des tambours arrière 8.2 et 9.2.

Les extrémités en regard des deux convoyeurs 8 et 9 sont séparées d'une distance minimale pour limiter les possibilités de passage des produits dans l'espace inter-convoyeurs, susceptibles de provoquer des bourrages. Les platines latérales 18 qui relient les extrémités en regard des tambours juxtaposés 8.2 et 9.1 sont adaptées en conséquence.
Toujours pour limiter les possibilités de passage des produits dans cet espace inter-convoyeurs, on prévoit avantageusement la présence d'un coin de remplissage 25, s'étendant sur toute la largeur des convoyeurs 8, 9, fixé entre les deux platines latérales 18. La forme générale de ce coin de remplissage 25 est adaptée à la fonction « anti-rétention » recherchée. Lors du réglage de tension précité, les platines 18 et le coin de remplissage 25 forment ensemble une structure mobile qui glisse ou coulisse sur le fond 2 de la cuve 1.

Les motorisations hydrauliques 13 et 14 qui actionnent en rotation respectivement les tambours 8.1 et 9.1 sont avantageusement alimentées en série à partir de la centrale hydraulique 26 de la machine ou de l'engin tracteur associé, de la manière illustrée sur la figure 3.

De manière à proposer à l'opérateur différentes possibilités de manoeuvre des convoyeurs 8 et 9, en particulier pour lui permettre d'alimenter le plus régulièrement possible la structure de démêlage/distribution 6 (afin d'éviter les bourrages) :
- l'alimentation en série des motorisations 13 et 14 s'effectue par l'intermédiaire d'un distributeur 27 qui permet le découplage de la motorisation du convoyeur arrière 9, et
- il est prévu des moyens pour permettre à l'organe transporteur sans fin 8.3 du convoyeur avant 8 d'avancer à une vitesse plus rapide que celle du convoyeur arrière 9. Pour autoriser ce différentiel de vitesse, la motorisation 14 du convoyeur arrière 9 peut être prévue de cylindrée supérieure à celle de la motorisation 13 du convoyeur avant 8. Une autre solution peut consister à utiliser des motorisations 13 et 14 de même cylindrée, et à prévoir un variateur de vitesse sur la motorisation 14 dudit convoyeur arrière 9.

Cette structure de convoyage 7 constituée du double convoyeur 8, 9 et des motorisations hydrauliques 13, 14 associées, permet à l'opérateur d'optimiser l'alimentation en produits des moyens de démêlage/distribution 6.

En pratique, les produits à distribuer sont déposés sur les deux convoyeurs 8 et 9 par l'arrière de la cuve 1, au travers de l'ouverture de chargement 5.
L'opérateur pilote ensuite le mouvement des deux convoyeurs 8 et 9 de manière à déplacer la charge jusqu'aux moyens de démêlage/distribution 6, en vue de son traitement par le ou les rotors de démêlage, puis de sa distribution par la goulotte 10. En particulier, sur la figure 2, on a représenté une balle ronde de fourrage positionnée sur le convoyeur arrière 9, et une balle ronde de fourrage positionnée sur le convoyeur avant 8, cette dernière étant en cours de traitement par les moyens de démêlage/distribution 6 schématisés par un simple rotor d'axe horizontal.

Les moyens structurels décrits ci-dessus permettent à l'opérateur de gérer les déplacements des deux convoyeurs selon les différents cas de figures suivants, en fonction des charges en présence et de l'alimentation régulière recherchée des moyens de démêlage/distribution 6 :
- les deux convoyeurs 8 et 9 peuvent être déplacés dans le même sens et à la même vitesse, pour alimenter les moyens de démêlage/distribution 6.
- le convoyeur avant 8 peut être déplacé pour alimenter les moyens de démêlage/distribution 6, le convoyeur arrière 9 étant stoppé (action sur le distributeur 27). Cette configuration peut être utilisée en particulier pour permettre à la charge, sous forme de vrac ou en balles (rondes ou parallélépipédiques), qui est disposée sur le convoyeur avant 8, de pouvoir tourner sur elle-même sous l'action des rotors démêleurs, ceci sans être gênée par une charge amont (la rotation correspondante permet d'assurer une alimentation régulière des moyens de démêlage/distribution 6).
- le convoyeur avant 8 peut être déplacé à une vitesse supérieure à celle du convoyeur arrière 9. Dans ce dernier cas de figure, on assure une alimentation constante des moyens de démêlage/distribution 6, tout en créant un décompactage de la matière, en particulier pour des produits en vrac ou en balles parallélépipédiques.

De préférence, pour permettre à la charge qui est située en regard des moyens de démêlage/distribution 6 de pouvoir tourner sur elle-même, la distance entre le front d'attaque de ladite structure de démêlage 6 et l'arrière du convoyeur avant 8 est prévue au maximum de 1,8 m, cette distance maximale correspondant sensiblement aux hauteurs classiques de chargement.

On notera que le montage en série des deux motorisations 13 et 14, avec la présence du distributeur 27, autorise le déplacement du convoyeur arrière 9 uniquement si le convoyeur avant 8 fonctionne, ce qui présente un intérêt en terme de sécurité.

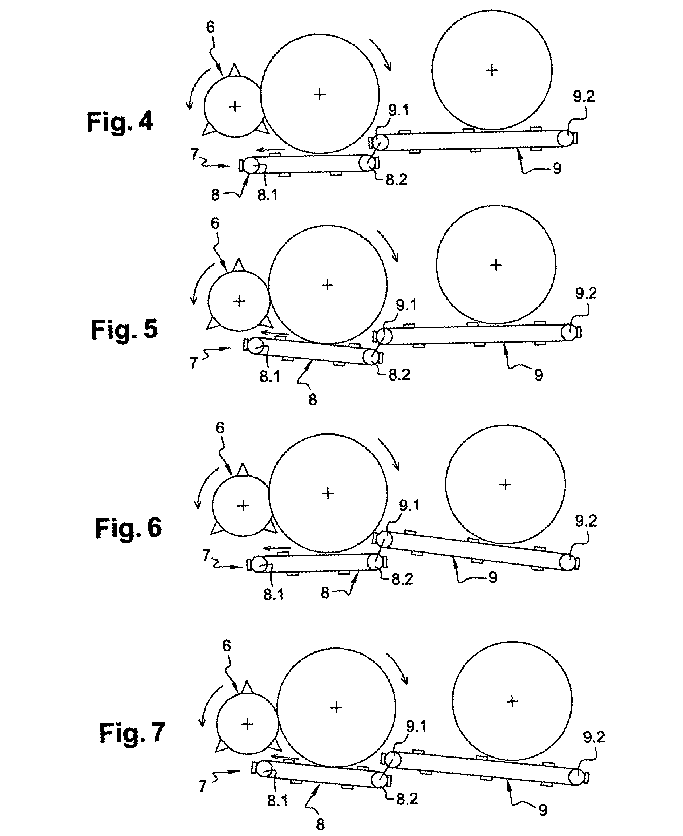

Par ailleurs, encore pour limiter les possibilités de passage des produits dans l'espace inter-convoyeurs, de manière alternative au coin de remplissage 25 (ou toujours avec ce coin 25), le tambour avant 9.1 du convoyeur arrière 9 est disposé au-dessus du tambour arrière 8.2 du convoyeur avant 8, et ces tambours 8.2 et 9.1 sont superposés l'un par rapport à l'autre.
Quelques agencements de ce genre sont représentés sur les figures 4 à 7. Les agencements correspondants se distinguent les uns des autres par l'inclinaison appliquée aux convoyeurs 8 et 9.

En l'occurrence, sur la figure 4, les convoyeurs 8 et 9 sont tous les deux disposés dans un plan horizontal, avec le convoyeur arrière 9 au-dessus du convoyeur avant 8.
Sur les figures 5 à 7, les convoyeurs avant 8 et/ou arrière 9, dont les extrémités juxtaposées sont superposées, sont inclinés par rapport à l'horizontale, cela selon une pente décroissante de l'avant vers l'arrière.
En particulier, sur la figure 5 le convoyeur avant 8 est incliné et le convoyeur arrière 9 est horizontal ; à l'inverse, sur la figure 6, le convoyeur avant 8 s'étend dans un plan horizontal et le convoyeur arrière 9 est incliné. Sur la figure 7, les deux convoyeurs 8 et 9 s'étendent dans des plans inclinés, parallèles l'un par rapport à l'autre.

On notera que les moyens précités permettant de réguler l'alimentation en produit(s) du dispositif de démêlage/distribution 6 peuvent être mis en oeuvre indépendamment du système de mise en tension des transporteurs sans fin décrits précédemment.

Même si la machine illustrée sur les figures 1 à 7 comporte toujours deux convoyeurs juxtaposés, le principe conforme à l'invention peut très bien s'appliquer à des fonds mobiles comprenant un convoyeur avant et plusieurs convoyeurs arrière.

D'autre part, le système de distribution du produit peut se situer à l'avant comme à l'arrière de la cuve.

## Revendications

1. Machine agricole pour la distribution de produits du genre fourrage, déchets, amendements, comprenant une cuve (1) de réception du produit à distribuer délimitée par un fond (2), par deux parois latérales (3, 4), et par une ouverture de chargement à l'arrière équipée éventuellement d'une porte (5), laquelle cuve (1) comporte une structure de démêlage et/ou de distribution (6), et ledit fond de cuve (2) étant équipé d'une structure de convoyage (7) agencée pour faire avancer le produit en vrac ou conformé en balles jusqu'à ladite structure de démêlage et/ou de distribution (6), ladite structure de convoyage (7) étant constituée d'au moins deux convoyeurs motorisés juxtaposés, l'un avant (8) situé du côté de ladite structure de démêlage et de distribution (6), et le ou les autres arrière (9), lesdits convoyeurs avant (8) et arrière (9) étant formés chacun d'un tambour avant (8.1, 9.1) et d'un tambour arrière (8.2, 9.2) autour desquels s'enroule un organe transporteur sans fin (8.3, 9.3), **caractérisée en ce que** le tambour avant (8.1) du convoyeur avant (8) est fixe, et le tambour arrière (8.2) du convoyeur avant (8), ainsi que tous les tambours (9.1, 9.2) du ou des convoyeurs arrière (9), sont montés flottants longitudinalement, lesdits tambours en regard (8.2, 9.1) des convoyeurs juxtaposés (8, 9) étant solidaires l'un de l'autre par l'intermédiaire de structures latérales de liaison (18), et des moyens tendeurs (16) étant prévus au niveau du tambour arrière (9.2) du convoyeur arrière (9) pour assurer le réglage simultané de la tension des organes transporteurs sans fin (8.3, 9.3) desdits convoyeurs (8, 9).

2. Machine selon la revendication 1, **caractérisée en ce que** les moyens tendeurs (16) sont du type vis (19)/écrou (20) disposés à chaque extrémité du tambour arrière (9.2) du convoyeur arrière (9).

3. Machine selon l'une quelconque des revendications 1 ou 2, **caractérisée en ce que** les tambours avant (8.1, 9.1) et arrière (8.2, 9.2) de chaque convoyeur (8, 9) sont solidarisés entre eux par l'intermédiaire de structures télescopiques du type fourreau (22)/coulisse (23), reliant les extrémités en regard desdits tambours (8, 9).

4. Machine selon l'une quelconque des revendications 1 à 3, **caractérisée en ce qu'**elle comporte un coin de remplissage (25), solidaire des structures latérales de liaison (18), aménagé entre les convoyeurs juxtaposés (8, 9), lesquels coin de remplissage (25) et structures latérales de liaison (18) constituent ensemble une structure coulissante sur le fond (2) de la cuve (1).

5. Machine selon l'une quelconque des revendications 1 à 4 **caractérisée en ce que** le tambour arrière (8.2) du convoyeur avant (8) est situé à un niveau inférieur par rapport à celui du tambour avant (9.1) du convoyeur (9) situé juste derrière, et **en ce que** les deux convoyeurs (8, 9) sont partiellement superposés au niveau de leur zone de jonction, notamment afin de diminuer ou de supprimer l'espace horizontal libre entre lesdits convoyeurs (8, 9).

6. Machine selon l'une quelconque des revendications 1 à 5, **caractérisée en ce qu'**elle comporte des moyens pour permettre à l'organe transporteur sans fin (8.3) du convoyeur avant (8) d'avancer plus vite que l'organe transporteur sans fin (9.3) du ou des convoyeurs arrière (9).

7. Machine selon la revendication 6, **caractérisée en ce que** l'un des tambours (8.1, 9.1) de chaque convoyeur (8, 9) est équipé d'une motorisation hydraulique (13, 14), lesquelles motorisations (13, 14) sont montées en série, le circuit étant équipé de moyens en forme d'organe de distribution (27) permettant le découplage de la motorisation (14) dudit ou desdits convoyeurs arrière (9).

8. Machine selon la revendication 7, **caractérisée en ce que** la motorisation (14) du ou desdits convoyeurs arrière (9) est équipée d'un variateur permettant de moduler un différentiel de vitesse entre le convoyeur avant (8) et le ou les convoyeurs arrière (9).

9. Machine selon l'une quelconque des revendications 7 ou 8, **caractérisée en ce que** la motorisation (14) du ou des convoyeurs arrière (9) est de cylindrée supérieure à celle de la motorisation (13) du convoyeur avant (9).

10. Machine selon l'une quelconque des revendications 1 à 9, **caractérisée en ce que** la distance entre le front d'attaque de la structure de démêlage et de distribution (6) et l'arrière du convoyeur avant (8) est au maximum de 1,80 mètre.

11. Machine selon l'une quelconque des revendications 1 à 10, **caractérisée en ce que** les organes transporteurs sans fin (8.3, 9.3) des convoyeurs avant (8) et arrière (9) sont constitués de traverses parallèles (12) entraînées par des chaînes latérales (11), les traverses (12), sur chacun desdits convoyeurs (8, 9), étant écartées les unes des autres d'une distance comprise entre 0 et 170 mm.

## Claims

1. An agricultural machine for the distribution of products such as fodder, waste, soil improvements, containing a tub (1) for receiving the product to be distributed delineated by a bottom (2), by two lateral walls (3, 4), and by a loading aperture at the rear fitted optionally with a door (5), wherein which tub (1) comprises a loosening and/or distribution structure (6), and said tub bottom (2) is fitted with a conveying structure (7) provided for feeding the product in bulk form or formed into bales up to said loosening and/or distribution structure (6), said conveying structure (7) being formed of at least two juxtaposed motorised conveyors, a front one (8) situated on the loosening and distribution structure (6) side, and the other rear one(s) (9), said front (8) and rear (9) conveyors being each formed of a front drum ( 8.1, 9.1) and of a rear drum (8.2, 9.2) around which is wound an endless transporting member (8.3, 9.3), **characterised in that** the front drum (8.1) of the front conveyor (8) is fixed, and the rear drum (8.2) of the front conveyor (8), as well as all the drums (9.1, 9.2) of the rear conveyor(s) (9), are mounted longitudinally floating, said facing drums (8.2, 9.1) of the juxtaposed conveyors (8, 9) being interconnected with one another via lateral linking structures (18), and tensioning means (16) being provided at the rear drum (9.2) of the rear conveyor (9) for ensuring simultaneous adjustment of the tension of the endless transporting members (8.3, 9.3) of said conveyors (8, 9).

2. A machine according to claim 1, **characterised in that** the tensioning means (16) are of the screw (19)/nut (20) type arranged at each end of the rear drum (9.2) of the rear conveyor (9).

3. A machine according to any of the claims 1 or 2, **characterised in that** the front (8.1, 9.1) and rear (8.2, 9.2) drums of each conveyor (8, 9) are interconnected to one another via sheath (22)/slide (23) type telescopic structures, connecting the facing ends of said drums (8, 9).

4. A machine according to any of the claims 1 to 3, **characterised in that** it contains a filling unit (25), interconnected with the lateral linking structures (18), provided between the juxtaposed conveyors (8, 9), which filling unit (25) and lateral linking structures (18) form together a structure sliding on the bottom (2) of the tub (1).

5. A machine according to any of the claims 1 to 4, **characterised in that** the rear drum (8.2) of the front conveyor (8) is situated lower than the front drum (9.1) of the conveyor (9) situated just behind, and **in that** both conveyors (8, 9) are partially superimposed at their junction zone, in particular so as to reduce or suppress the free horizontal space between said conveyors (8, 9).

6. A machine according to any of the claims 1 to 5, **characterised in that** it comprises means to enable the endless transporting member (8.3) of the front conveyor (8) to move forward faster than the endless transporting member (9.3) of the rear conveyor(s) (9).

7. A machine according to claim 6, **characterised in that** one of the drums (8.1, 9.1) of each conveyor (8, 9) is fitted with a hydraulic motorised system (13, 14), which motorised systems (13, 14) are mounted in series, wherein the circuit is equipped with means in the form of a distribution member (27) enables de-coupling of the motorised system (14) from said rear conveyor(s) (9).

8. A machine according to claim 7, **characterised in that** the motorised system (14) of said rear conveyor(s) (9) is fitted with a variable-speed drive unit enabling to modulate a speed differential between the front conveyor (8) and the rear conveyor(s) (9).

9. A machine according to any of the claims 7 or 8, **characterised in that** the motorised system (14) of the rear conveyor(s) (9) has a larger cubic capacity than that of the motorised system (13) of the front conveyor (9).

10. A machine according to any of the claims 1 to 9, **characterised in that** the distance between the leading front of the loosening and distribution structure (6) of the rear of the front conveyor (8) is maximum 1.80 metre.

11. A machine according to any of the claims 1 to 10, **characterised in that** the endless transporting members (8.3, 9.3) of the front (8) and rear (9) conveyors consist of parallel crosspieces (12) driven by lateral chains (11), the crosspieces (12), on each of said conveyors (8, 9), being spaced apart from one another by a distance ranging between 0 and 170 mm.

## Patentansprüche

1. Landwirtschaftliche Maschine zur Verteilung von Produkten von der Art von Viehfutter, Abfällen, Düngemitteln, welche eine Wanne (1) zur Aufnahme des zu verteilenden Produkts umfasst, die durch einen Boden (2), durch zwei Seitenwände (3, 4) und durch eine hinten befindliche Beschickungsöffnung, die eventuell mit einer Tür (5) ausgestattet ist, begrenzt ist, wobei die Wanne (1) eine Auflockerungs- und/oder Verteilungskonstruktion (6) aufweist und der Wannenboden (2) mit einer Förderkonstruktion (7) ausgestattet ist, die so ausgebildet ist, dass sie bewirkt, dass sich das Produkt, lose oder zu Ballen geformt, bis zu der Auflockerungs- und/oder Verteilungskonstruktion (6) vorwärts bewegt, wobei die Förderkonstruktion (7) aus mindestens zwei nebeneinander angeordneten motorgetriebenen Förderern besteht, wobei der eine, vordere (8) sich auf der Seite der Auflockerungs- und Verteilungskonstruktion (6) befindet und der oder die anderen sich hinten (9) befinden, wobei der vordere (8) und der oder die hinteren Förderer (9) jeweils durch eine vordere Trommel (8.1, 9.1) und eine hintere Trommel (8.2, 9.2) gebildet werden, um welche herum sich ein endloses Transportorgan (8.3, 9.3) schlingt, **dadurch gekennzeichnet, dass** die vordere Trommel (8.1) des vorderen Förderers (8) feststehend ist und die hintere Trommel (8.2) des vorderen Förderers sowie alle Trommeln (9.1, 9.2) des oder der hinteren Förderer (9) in Längsrichtung schwimmend gelagert sind, wobei die einander gegenüber liegenden Trommeln (8.2, 9.1) der nebeneinander angeordneten Förderer (8, 9) mittels seitlicher Verbindungskonstruktionen (18) fest miteinander verbunden sind und im Bereich der hinteren Trommel (9.2) des hinteren Förderers (9) Spannmittel (16) vorgesehen sind, um die gleichzeitige Einstellung der Spannung der endlosen Transportorgane (8.3, 9.3) der Förderer (8, 9) sicherzustellen.

2. Maschine nach Anspruch 1, **dadurch gekennzeichnet, dass** die Spannmittel (16) vom Typ Schraube (19)/Mutter (20) sind, die an jedem Ende der hinteren Trommel (9.2) des hinteren Förderers (9) angeordnet sind.

3. Maschine nach einem der Ansprüche 1 oder 2, **dadurch gekennzeichnet, dass** die vordere (8.1, 9.1) und die hintere (8.2, 9.2) Trommel jedes Förderers (8, 9) mittels teleskopischer Konstruktionen vom Typ Hülse (22)/Gleitführung (23), welche die einander gegenüber liegenden Enden der Trommeln (8, 9) verbinden, fest miteinander verbunden sind.

4. Maschine nach einem der Ansprüche 1 bis 3, **dadurch gekennzeichnet, dass** sie einen mit den seitlichen Verbindungskonstruktionen (18) fest verbundenen Füllkeil (25) aufweist, der zwischen den nebeneinander angeordneten Förderern (8, 9) angebracht ist, wobei der Füllkeil (25) und die seitlichen Verbindungskonstruktionen (18) zusammen eine auf dem Boden (2) der Wanne (1) gleitende Konstruktion bilden.

5. Maschine nach einem der Ansprüche 1 bis 4, **dadurch gekennzeichnet, dass** sich die hintere Trommel (8.2) des vorderen Förderers (8) auf einer Höhe befindet, die niedriger ist als die der vorderen Trommel (9.1) des unmittelbar dahinter befindlichen Förderers (9), und **dadurch**, dass die zwei Förderer (8, 9) auf der Höhe ihres Kopplungsbereiches teilweise übereinander angeordnet sind, insbesondere um den freien horizontalen Zwischenraum zwischen den Förderern (8, 9) zu verkleinern oder zu beseitigen.

6. Maschine nach einem der Ansprüche 1 bis 5, **dadurch gekennzeichnet, dass** sie Mittel aufweist, um dem endlosen Transportorgan (8.3) des vorderen Förderers (8) zu ermöglichen, sich schneller vorwärts zu bewegen als das endlose Transportorgan (9.3) des oder der hinteren Förderer (9).

7. Maschine nach Anspruch 6, **dadurch gekennzeichnet, dass** die eine der Trommeln (8.1, 9.1) jedes Förderers (8, 9) mit einem hydraulischen Antriebsmotor (13, 14) ausgestattet ist und diese Antriebsmotoren (13, 14) in Reihe geschaltet sind, wobei die Schaltung mit Mitteln in Form eines Verfeilungsorgans (27) ausgestattet ist, welches die Abkopplung des Antriebsmotors (14) von dem oder den hinteren Förderern (9) ermöglicht.

8. Maschine nach Anspruch 7, **dadurch gekennzeichnet, dass** der Antriebsmotor (14) des oder der hinteren Förderer (9) mit einem stufenlosen Regelgetriebe ausgestattet ist, das es gestattet, eine Geschwindigkeitsdifferenz zwischen dem vorderen Förderer (8) und dem oder den hinteren Förderern (9) zu modulieren.

9. Maschine nach einem der Ansprüche 7 oder 8, **dadurch gekennzeichnet, dass** der Antriebsmotor (14) des oder der hinteren Förderer (9) einen Hubraum aufweist, der größer ist als der des Antriebsmotors (13) des vorderen Förderers (8).

10. Maschine nach einem der Ansprüche 1 bis 9, **dadurch gekennzeichnet, dass** der Abstand zwischen der Angriffsfront der Auflockerungs- und Verteilungskonstruktion (6) und der Hinterseite des vorderen Förderers (8) maximal 1,80 Meter beträgt.

11. Maschine nach einem der Ansprüche 1 bis 10, **dadurch gekennzeichnet, dass** die endlosen Transportorgane (8.3, 9.3) des vorderen (8) und des hinteren Förderers (9) von parallelen Querstreben (12) gebildet werden, die von seitlichen Ketten (11) angetrieben werden, wobei die Querstreben (12) auf jedem der Förderer (8, 9) einen Abstand voneinander aufweisen, der zwischen 0 und 170 mm beträgt.
